# EUROPÄISCHE PATENTSCHRIFT

(11) **EP 0 992 141 B1**
(45) Veröffentlichungstag und Bekanntmachung des Hinweises auf die Patenterteilung: **05.04.2006**
(21) Anmeldenummer: 98928318.9
(22) Anmeldetag: 26.05.1998
(51) Int. Cl.: H04L 27/28, H04B 10/12

(54) **EINRICHTUNG ZUR ÜBERTRAGUNG VON OPTISCHEN SIGNALEN UNTERSCHIEDLICHER FREQUENZEN**
DEVICE FOR TRANSMITTING OPTICAL SIGNALS HAVING DIFFERENT FREQUENCIES
DISPOSITIF POUR TRANSMETTRE DES SIGNAUX OPTIQUES DE FREQUENCES DIFFERENTES

(30) Priorität: 25.06.1997 US 882638
(43) Veröffentlichungstag der Anmeldung: 12.04.2000
(73) Patentinhaber: Deutsche Telekom AG, 53113 Bonn (DE)
(72) Erfinder: DULTZ, Wolfgang, D-65936 Frankfurt am Main (DE); KOOPS, Hans, Wilfried, Peter, D-64372 Ober-Ramstadt (DE); FRINS, Erna, 11600 Montevideo (UY); MELTZ, Gerald, Avon, CT 06001 (US)
(74) Vertreter: Gornott, Dietmar
(86) Internationale Anmeldenummer: PCT/EP1998/003085
(87) Internationale Veröffentlichungsnummer: WO 1999/000956

(56) Entgegenhaltungen:
- DE-A- 19 630 705
- US-A- 4 635 278
- PATENT ABSTRACTS OF JAPAN vol. 095, no. 009, 31. Oktober 1995 & JP 07 139996 A (OKI ELECTRIC IND CO LTD), 2. Juni 1995

## Beschreibung

Die Erfindung betrifft eine Einrichtung zur Übertragung von optischen Signalen unterschiedlicher Frequenzen, die in ein und derselben optischen Faser seriell geführt werden.

Optische Nachrichtenübertragung erfolgt häufig durch Übermittlung einer sequenziellen Folge einzelner, binär codierter Lichtimpulse. Da die Übertragungsfrequenzen heute bereits in Bereiche vorstoßen, die eine elektronische Datenverarbeitung und insbesondere komplizierte Verschlüsselungen und Entschlüsselungen zur geheimen Übermittlung nicht mehr erlauben, besteht ein hoher Bedarf an optischen Elementen, welche die zeitliche Bitfolge optisch zur parallelen Weiterverarbeitung aufbereiten können. Die optische Parallelverarbeitung ist in der Lage, eine große Menge binärer oder analoger Signale, die zu einem Bild oder Muster angeordnet sind, gleichzeitig zu transformieren, und arbeitet somit erheblich schneller als ein herkömmlicher elektronischer Rechner.

Aus Patent Abstracts of Japan, Bd. 095, Nr. 009, 31. Oktober 1995 (1995-10-31) & JP 07 139996 A (OKI ELECTRONIC IND CO LTD), 2. Juni 1995 (1995-06-02) ist es bekannt, frequenzmoduliertes Licht über ein Lichtventil einer Sensorzeile zuzuleiten, von der zeitsequentielle Signale einem opto-elektrischen Wandler zugeführt werden. Die elektrischen Signale werden dann mit Hilfe eines Demultiplexers in mehrere parallele Signale umgewandelt.

Mit einer Parallelverarbeitung ist für gewisse optische Operationen, wie z.B. der Fouriertransformation, ein außerordentlich hoher Zeitgewinn zu erzielen. Da optische Fouriertransformationen ein wesentlicher Bestandteil der maschinellen Mustererkennung sind, würden gerade Verschlüsselungen und Entschlüsselungen von Nachrichten optisch leicht und sehr schnell erfolgen können. Bekannte elektro-optische Bauteile, die eine zeitliche Impulsfolge zum Zwecke der Parallelverarbeitung in eine räumlich angeordnete Fläche abbilden, können z.B. auf der Grundlage der Brownschen Röhre aufgebaut sein.

Wie aus dem Patent DE 196 09 234 C2 (Koops) bekannt ist, das nicht unmittelbar als der der vorliegenden Erfindung zugrundeliegender Stand der Technik, sondern als eine alternative Lösung zu betrachten ist, kann der Elektronenstrahl derzeit nur in Mikroröhren schnell genug abgelenkt werden, um Signale im Multigigahertzbereich einzulesen.

Eine andere Methode codiert die einzelnen optischen Impulse alternierend mit Hilfe der Polarisation des Lichtes. Der erste, dritte, fünfte, also jeder ungerade Impuls, wird z.B. vertikal, alle geradzahligen Impulse horizontal linear polarisiert. Dann lassen sich mit Hilfe eines polarisierenden Strahlteilers jeweils wenigstens die geraden und ungeraden Impulse örtlich trennen. Eine Kaskadierung ermöglicht höhere Trennungsgrade. Der Vorteil dieser Methode liegt darin, daß das separierende Element - der Strahlteiler - rein passiv ist. Nachdem die Impulse z. B. elektro-optisch polarisationscodiert wurden, ist keine aktive Schaltung mehr notwendig. Der Nachteil des Verfahrens ist offensichtlich die geringe Zahl von nur zwei parallelen Kanälen pro Kaskadenstufe.

Aufgabe der vorliegenden Erfindung ist es, eine Einrichtung der eingangs genannten Art anzugeben, welche die parallele Weiterverarbeitung von in einer optischen Faser seriell auftretender, frequenzcodierter optischer Signale ermöglicht. Die Einrichtung soll kostengünstig herstellbar und einfach und platzsparend installierbar sein.

Diese Aufgabe wird dadurch gelöst, dass die Faser mit einer Licht nach der Frequenz aufteilenden Struktur versehen ist, welche durch die Faser geführte optische Signale nach ihrer Frequenz trennen und in Abhängigkeit von der Frequenz gegeneinander räumlich versetzt nach außen abstrahlen, dass eine geeignete Vorrichtung die abgestrahlten Signale zur Weiterverarbeitung auf eine ihrer jeweiligen Frequenz zugeordnete Stelle einer außerhalb der Faser befindlichen Raumfläche abbildet.

Die derartig getrennten und abgebildeten Signale können entweder sofort durch einen auf der Raumfläche angeordneten Schirm sichtbar gemacht werden oder sie können weiterverarbeitet werden.

Die frequenzaufteilende Struktur der Faser kann als Spektrograph angelegt sein, durch den sich die optischen Impulse lokal voneinander trennen und auf der Raumfläche anordnen lassen. Es eignen sich zu diesem Zweck insbesondere ein Prismenspektrograph, Gitterspektrograph, aber auch Zwei- oder Vielstrahlinterferometer.

Zur Benutzung der erfindungsgemäßen Einrichtung ist es notwendig, daß die einzelnen aufeinanderfolgenden optischen Impulse anstelle der üblichen Polarisationscodierung eine Frequenzcodierung haben. Da einerseits die Wellenlänge des Lichtes innerhalb eines optischen Fensters ohne weiteres um 100 nm geändert werden kann und andererseits sich Halbleiterlaser durch Veränderung der angelegten Spannung um mehrere Nanometer verstimmen lassen, besteht im Prinzip die Möglichkeit, optischen Impulsen unterschiedliche Frequenzen in einem breiten Bereich zuzuordnen. Dazu müssen mehrere Halbleiterlaser mit verschiedenen Schwerpunktfrequenzen elektrisch schaltbar in ihrer Abstrahlfrequenz geändert werden können. Die entstehenden optischen Impulse unterschiedlicher Frequenz werden dann zur Nachrichtenübertragung binär codiert und in die übertragende optische Faser eingespeist. Die Nachricht wird also beispielsweise einer Folge von Impulsen steigender Frequenz Vi aufgeprägt, von denen der erste die Frequenz V1 hat. Dabei gilt dann V1 < V2 < V3 < ... < Vi < Vi+1 < ... < Vn.

Bei einer ersten Ausgestaltung der Erfindung ist vorgesehen, daß die Faser selbst abschnittsweise als frequenzaufteilende Struktur ausgebildet ist, welche die optischen Signale nach ihrer Frequenz trennt und in Abhängigkeit von der Frequenz gegeneinander räumlich versetzt abstrahlt.

Dadurch wird eine sehr kompakte Bauweise erreicht, da die lichtleitenden Bereiche der Faser selbst als funktionales Element fungieren und weitere Aufbauten auf der Faser zur Herstellung der Strukturen überflüssig sind.

Die Raumfläche kann eben sein, oder zur Erreichung eines bestimmten Effekts, beispielsweise der Entzerrung der abgebildeten Signale oder zur Abbildungskorrektur eine andere Form aufweisen. Ferner kann durch eine Krümmung oder Schrägstellung der Raumfläche oder durch den Einsatz zusätzlicher Verzögerungselemente ein zeitlicher Versatz der in der Faser seriell ankommenden Signale erreicht werden, so daß die Signale zeitgleich an der Raumfläche abgenommen und damit auch wirklich parallel weiterverarbeitet werden können.

Durch die in weiteren Unteransprüchen aufgeführten Maßnahmen sind weitere vorteilhafte Weiterbildungen und Verbesserungen der Erfindung möglich.

Ausführungsbeispiele der Erfindung sind in der Zeichnung anhand mehrerer Figuren dargestellt und in der nachfolgenden Beschreibung näher erläutert. Es zeigt:
- Fig. 1: die Verwendung eines passiven optischen Bauteils zur Aufteilung von Licht am Ende einer optischen Faser,
- Fig. 2: die Verwendung diagonal angeordneter Fasergitter zur Auskopplung des Lichtes aus der optischen Faser,
- Fig. 3: die Verwendung anders diagonal angeordneter Fasergitter zur Auskopplung des Lichtes aus der optischen Faser,
- Fig. 4: eine spiralförmige Anordnung von Fasergittern,
- Fig. 5: die Verwendung von in eine optische Faser eingeätzten photonischen Kristallen zur Frequenzaufteilung von Licht,
- Fig. 6: die zwischen optischen Impulsen verschiedener Frequenzen eintretende Verzögerung und
- Fig. 7: die Verwendung eines Verzögerungselements zur Gewährleistung einer simultanen Abbildung der Lichtimpulse auf einer Matrix.

Gleiche Teile sind in den Figuren mit gleichen Bezugszeichen versehen.

In den Figuren sind mikrotechnisch als Teile von optischen Fasern hergestellte Strukturen durch schematische Abbildungen der durch sie simulierten optischen Elemente, wie Linsen und Prismen, symbolisiert. Im folgenden werden Schriften erwähnt, welche die mikrotechnische Herstellung der verwendeten optischen Elemente näher beschreiben. Die optische Wirkung der Mikrostrukturen ist in der Regel mit der von Linsen, Prismen und ähnlichem vergleichbar. Die verwendeten Elemente erhalten daher im Text auch diese Bezeichnungen.

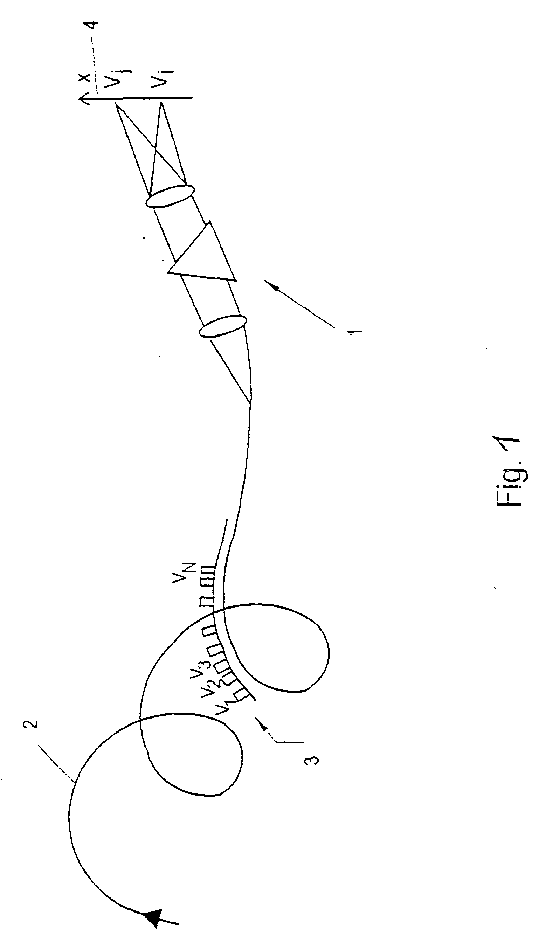

Die vorliegende Erfindung verwendet eine passive optisch wirksame Struktur, welche durchgeleitetes Licht spektral örtlich aufteilt, zur Trennung von seriell in einer optischen Faser geleiteten frequenzcodierten Impulsen und bildet sie auf einer räumlich angeordneten Fläche ab. Fig. 1 zeigt die Verwendung eines optischen Bauteils 1 zu diesem Zweck. Es handelt sich im Beispiel um einen Spektrographen auf der Grundlage eines Prismas, das in eine optische Faser 2 oder deren Ende eingearbeitet ist, wobei die optische Faser eine frequenzcodierte digitale oder analoge Nachricht 3 als optischen Impuls übermittelt, der auf einer räumlich angeordneten Fläche 4 abgebildet wird. Fasergitter können auch als Spektrographen zur räumlichen Aufteilung der frequenzcodierten Lichtimpulse eingesetzt werden. Solche Fasergitter sind beispielsweise aus US 5,546,481 (Meltz et al.) bekannt.

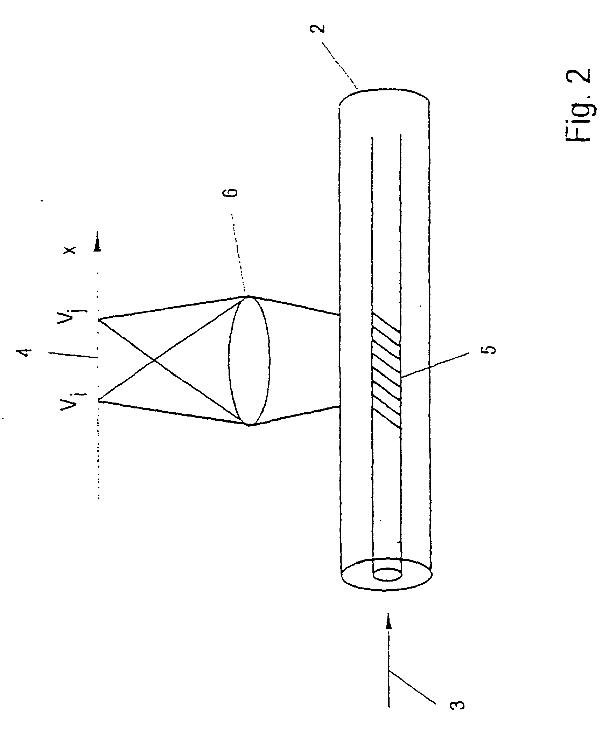

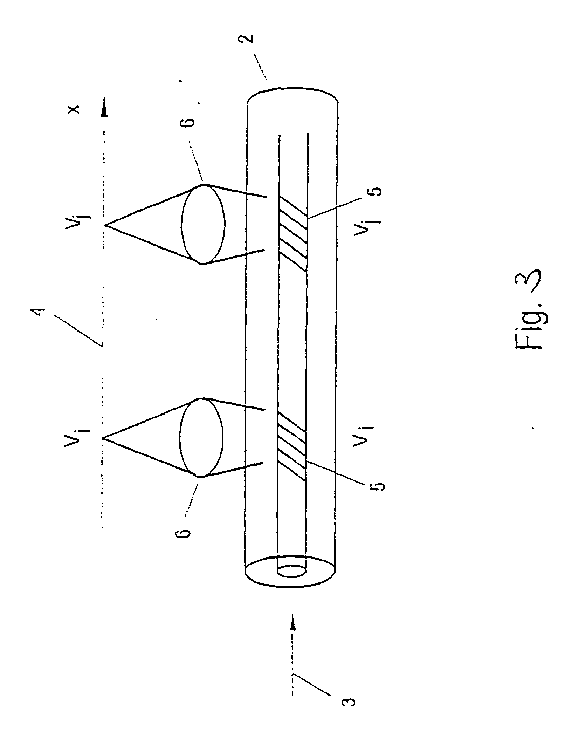

In Fig. 2 und Fig. 3 sind schräg (geblazed) eingeschriebene Fasergitter 5 diagonal angeordnet, um Licht aus der Faser 2 auszukoppeln. Durch geeignete fokussierende Elemente 6, wie beispielsweise die aus DE 196 30 705 A1 (Koops) bekannten anamorphotischen Linsen, lassen sich die Strahlen einer einzelnen Frequenz (Farbe) punktförmig auf einer Raumfläche 4 vereinigen. Jede Frequenz Vi hat dabei einen anderen Fokussierpunkt. Die Raumfläche 4 kann parallel zur Faser 2 liegen, im Raum gekrümmt oder schräggestellt sein.

Was die Linsen 6 betrifft, so können diese auch direkt auf der optischen Faser angebracht werden. Eine Methode zur Herstellung solcher Linsen ist beispielsweise aus DE 197 13 374 (Koops et.al.) bekannt. Bei einer optischen Faser mit einem schräg (geblazed) eingeschriebenen Bragg-Fasergitter kann eine Linse auf den optischen Mantel der Faser aufgebracht werden. Die zu verwendenden Linsen werden auf den Oberflächen des zylindrischen optischen Mantels montiert und können nach dem Aufdampfverfahren durch Korpuskularstrahlen-Lithographie mit großer Fokaltiefe oder durch Röntgen-Lithographie mit intensitätsmodulierten Masken angefertigt werden. Ferner kann die Linse auch durch Polymerisation hergestellt werden, d.h. durch Strahlenpolymerisation in die Oberfläche absorbierter oder auf sie aufgedampfter Monomere unter Einwirkung von aus der Faser durch Beugung austretendem Licht angefertigt werden. Dabei sollte die Materialzufuhr zur Formgebung des Linsenprofils durch eine Lochmaske geregelt werden.

Bei der in Fig. 3 dargestellten optischen Faser 2 sind schräg (geblazed) eingeschriebene Fasergitter 5 gezeigt, die aus mehreren hintereinander in der optischen Faser 2 angeordneten Gittern unterschiedlicher Periode bestehen. Jedes Gitter ist so anlegt, daß es Licht einer einzigen Frequenz aus der optischen Faser 2 auskoppelt und abstrahlt. Dadurch lassen sich ebenfalls, wie im Fall nach Fig. 2, durch fokussierende Elemente 6 linienhafte Anordnungen der einzelnen Lichtimpulse außerhalb der optischen Faser 2 auf einer Raumfläche 4 erreichen.

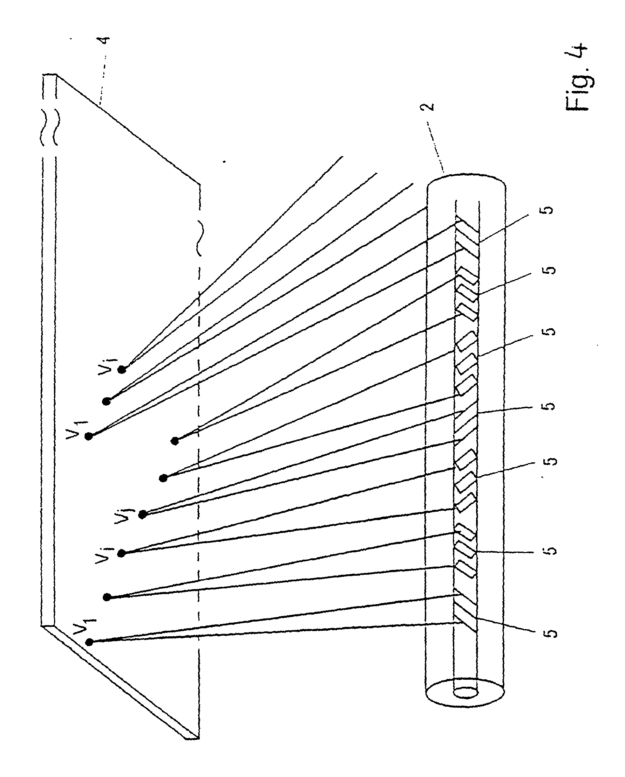

Fig. 4 zeigt eine optische Faser, bei der einzelne schräg (geblazed) eingeschriebene Fasergitter 5 wendeltreppenartig in der optischen Faser 2 angeordnet sind. Dadurch und in Verbindung mit geeigneten fokussierenden Elementen 6 (hier ohne Abbildung, jedoch denen in den anderen Figuren entsprechend) lassen sich die Impulse auf der hier ebenen Raumfläche 4, entlang welcher beispielsweise ein Projektionsschirm angeordnet sein kann, zeilen- und spaltenweise abbilden. Jeder Gang der spiralförmigen Gittergruppe entspricht etwa einer Zeile, auf der nebeneinander die einzelnen Spalten laufen. Nebeneinander liegende Plätze in der Zeile entsprechen hintereinander liegenden Gittern in der Faser 2 mit leicht unterschiedlicher Schmiegeebene. Untereinander liegende Plätze in den Spalten entsprechen Gittern in direkt hintereinander liegenden Schraubenwindungen der Wendeltreppe. Anstelle der wendelförmigen Anordnung der Gitter können die optischen Fasern 2 auch selbst gewendelt oder verdreht sein (ohne Abbildung) und so den gleichen Effekt einer Anordnung der Lichtimpulse bewirken.

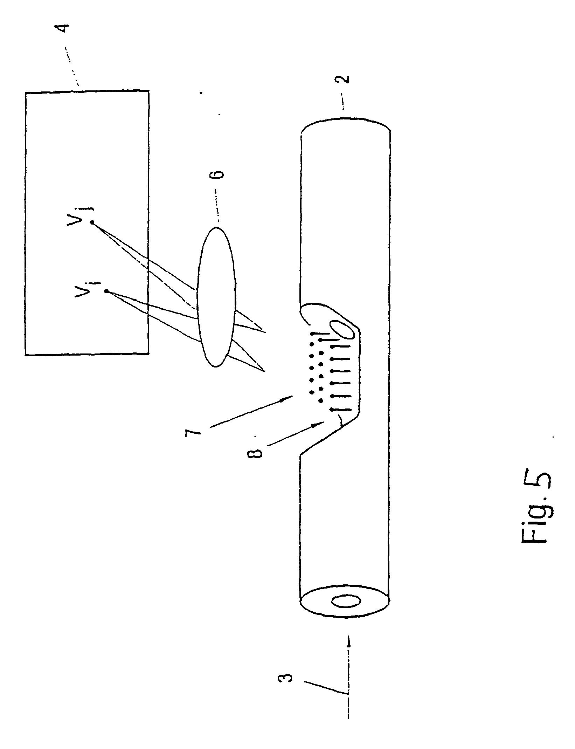

Wie in Fig. 5 gezeigt ist, lassen sich an Stelle von lichtgenerierten Fasergittern die frequenzaufteilenden Elemente auch als photonische Kristalle 7 aufbauen. Photonische Kristalle sind Kristalle mit Gitterkonstanten von einigen hundert Manometern, die im Gegensatz zu den oben beschriebenen Fasergittern aus viel weniger Einzelelementen (Gitterbausteinen) bestehen, da die Brechungsindexunterschiede weitaus größer sind als bei den Fasergittern. Außerdem verstärken Resonanzeffekte ihre Effizienz. Photonische Kristalle und ihre Herstellung werden von H. Koops in dem Artikel "Photonic crystals built by three- dimensional additive lithografy enable integrated optic of high density", SPIE, Bd. 2849/29 (Denver/USA 1996) behandelt. Die photonischen Kristalle können ebenso wie die Fasergitter als frequenzselektive Spiegel, Prismen oder Strahlteiler ausgebildet werden.

Die photonischen Kristalle werden wie in Fig. 1 am Ende der optischen Faser 2 angewandt oder wie in Fig. 5 in kleinen eingeätzten Kanälen oder Gruben 8 in der optischen Faser 2 untergebracht. Ein Verfahren zur Herstellung solcher kleiner Kanäle oder Gruben 8 in der optischen Faser 2 ist beispielsweise aus DE 197 13 371 (Koops et al.) unter dem Titel "Wellenlängen-Entkopplung aus D-Profil-Fasern mit photonischen Kristallen" bekannt. Im genannten Patent wird Licht in einer D-Profil-Faser unmittelbar unterhalb der Faseroberfläche übertragen. In diese Faseroberfläche wird durch Lithographie und Trockenätzung, durch chemische Naßätzung oder durch Laser- oder Ionenablation ein nur wenige Mikrometer breiter Einschnitt vorgenommen. Durch additive, dreidimensionale Lithographie wird sodann ein photonischer Kristall genau in die Bahn des Lichtes eingesetzt, durch den aufgrund des selektiven Effekts des Kristalls auf das übertragene Licht ein kleiner Teil des Spektrums in die Faser hinein oder aus ihr heraus gekoppelt werden kann. Dieses Licht, das einen kleinen Spektralbereich umfaßt, kann seitlich aus der Faser ausgekoppelt werden, da Medien aus photonischem Kristall Licht entweder durchlassen oder ausschliesslich im Inneren des Materials weiterleiten, sofern das Licht eine bestimmte Wellenlänge hat. Aufgrund der besonderen Beschaffenheit des Kristalls kann auf diese Weise ein Teil des Lichtes mit einem Winkel von weniger als 90° aus der Faser reflektiert werden. Mit Hilfe einer dreidimensional konstruierten Linse kann das Licht auch in eine weiterführende Faser abgelenkt werden.

Von den Kanälen oder Gruben aus beugen die photonischen Kristalle also das Licht der Frequenz Vi aus der Faser 2 heraus. Durch geeignete Gitterkonstanten der photonischen Kristalle 7 lassen sich in hintereinander liegenden Gruben (Ausschnitten) 8 in der optischen Faser 2 die verschiedenen Frequenzen und damit Lichtimpulse aus der Faser 2 auskoppeln und mit fokussierenden Elementen auf der Raumfläche 4 abbilden oder in weitere Wellenleiter oder Detektoren einkoppeln.

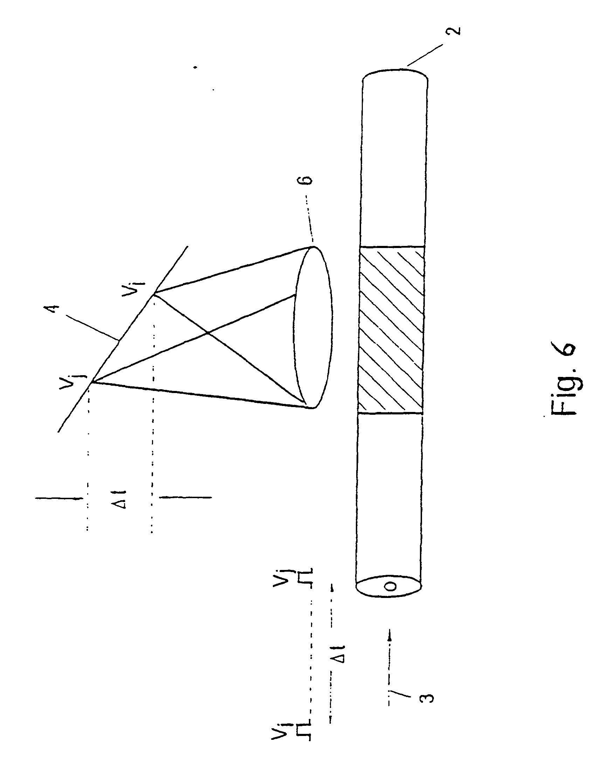

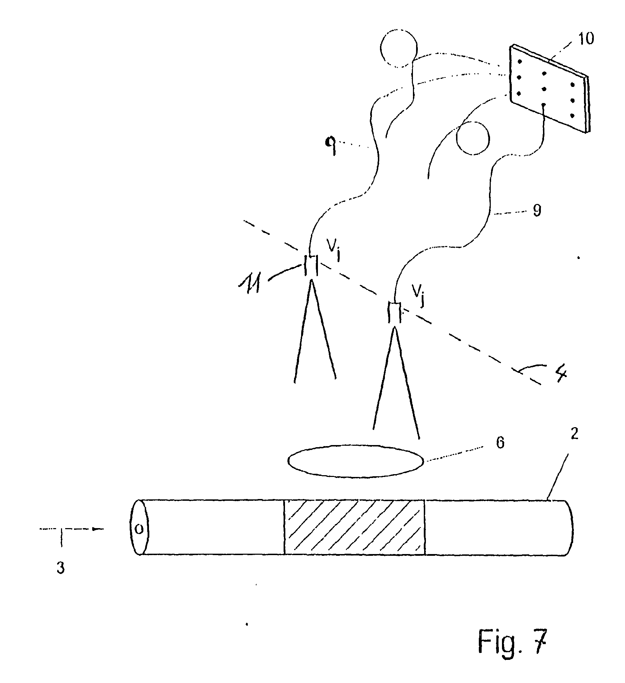

Bei den in Fig. 6 und Fig. 7 gezeigten Beispielen erfolgt eine Nachrichtenübertragung mit Hilfe der oben beschriebenen frequenzaufteilenden Elemente, also mit einzelnen Lichtimpulsfolgen. Jede dieser Folgen besteht aus einer Zahl von optischen Impulsen, die durch die frequenzaufteilende Struktur (hier als schraffierter Bereich dargestellt) räumlich voneinander getrennt und z.B. auf einen entlang der Raumfläche 4 angeordneten Schirm projiziert werden. Wie man anhand Fig. 6 leicht erkennt, treffen die Impulse Vi nur bei gewissen Stellungen des Schirmes zur gleichen Zeit (um die Zeitverzögerung Delta t versetzt) auf dem Schirm ein. Als Verzögerungsmechanismus für einige der einzelnen Lichtimpulssequenzen kann der Schirm gekippt oder unter Umständen gekrümmt werden, um die Impulse zyklusweise gleichzeitig durch Aufleuchten anzuzeigen.

Die Verzögerung kann anstelle einer Neigung oder Krümmung (oder in Verbindung mit beiden) auch dadurch erfolgen, daß der Schirm mit einem Fluoreszenz- oder Phosphoreszenzstoff bestrichen ist, der so lange nachleuchtet, bis alle Impulse einer Impulsfolge eingetroffen sind. Um ein starkes unerwünschtes Nachleuchten zu vermeiden, welches zum Überlappen der einzelnen Impulsfolgen führen würde, müssen elektrische oder elektro-optische Schaltelemente verwendet werden, welche die einzelnen Folgen trennen.

Wie Fig. 7 zeigt, können die Einzelimpulse durch die zur Einkopplung von Licht ausgebildeten und entlang der Raumfläche 4 angeordneten Enden 11 optischer Fasern 9 aufgefangen und auf einer Matrix 10 abgebildet werden. Jede einzelne optische Faser 9 muß für die von ihr aufgefangenen Impulse als Verzögerungsstrecke (Verzögerungsintervall) dienen, so daß die Impulse einer Frequenzfolge zur gleichen Zeit auf der Matrix 10 abgebildet werden. Zur optischen Weiterverarbeitung werden Detektoren benötigt, die der Breitbandigkeit der Impulsfolge Rechnung tragen. Andere Verzögerungselemente können als Luftstrecke oder Glasprisma oder Gradientenindexprisma ausgebildet sein.

Anstelle der optischen Fasern 9 können Detektoren direkt verwendet werden. Jeder Impuls einer Folge wird getrennt detektiert, und die Verzögerung zur parallelen elektronischen Weiterverarbeitung erfolgt auf elektronischem Wege.

## Patentansprüche

1. Einrichtung zur Übertragung von optischen Signalen unterschiedlicher Frequenzen, insbesondere zu Nachrichtenzwecken, die in ein und derselben optischen Faser (2) seriell geführt werden, **dadurch gekennzeichnet, dass** die Faser (2) mit einer Licht nach der Frequenz aufteilenden Struktur (1) versehen ist, welche durch die Faser (2) geführte optische Signale (3) nach ihrer Frequenz trennen und in Abhängigkeit von der Frequenz gegeneinander räumlich versetzt nach außen abstrahlen, dass eine geeignete Vorrichtung (6) die abgestrahlten Signale (Vi) zur Weiterverarbeitung auf eine ihrer jeweiligen Frequenz zugeordnete Stelle (x) einer außerhalb der Faser (2) befindlichen Raumfläche (4) abbildet.

2. Einrichtung nach Anspruch 1, **dadurch gekennzeichnet, dass** die Faser (2) selbst abschnittsweise als frequenzaufteilende Struktur (1) ausgebildet ist, welche die optischen Signale (3) nach ihrer Frequenz trennt und in Abhängigkeit von der Frequenz gegeneinander räumlich versetzt abstrahlt.

3. Einrichtung nach Anspruch 2, **dadurch gekennzeichnet, dass** die geeignete Vorrichtung eine Fokussiereinrichtung (6) ist.

4. Einrichtung nach einem der vorhergehenden Ansprüche, **dadurch gekennzeichnet, dass** an der Raumfläche wenigstens ein Fokussierelement zur Entgegennahme von auf die Raumfläche abgebildeten Signalen vorgesehen ist.

5. Einrichtung nach einem der vorhergehenden Ansprüche 1, 2 oder 4, **dadurch gekennzeichnet, dass** für jedes auf der Raumfläche abgebildete Signal ein Fokussierelement vorgesehen ist.

6. Einrichtung nach Anspruch 5, **dadurch gekennzeichnet, dass** die Fokussierelemente an den Enden (11) von optischen Fasern (9) sitzen, welche zur Weiterleitung der Signale dienen.

7. Einrichtung nach einem der vorhergehenden Ansprüche, **dadurch gekennzeichnet, dass** die Signale auf linienförmig angeordnete Stellen der Raumfläche (4) abgebildet werden.

8. Einrichtung nach einem der vorhergehenden Ansprüche, **dadurch gekennzeichnet, dass** die Form der Raumfläche (4) derart ausgebildet ist, dass jedes einzelne Signal (Vi) in Abhängigkeit von seiner Frequenz mit einer bestimmten vorgegebenen zeitlichen Verschiebung an die Raumfläche gelangt.

9. Einrichtung nach einem der vorhergehenden Ansprüche, **dadurch gekennzeichnet, dass** die Form und Anordnung der Raumfläche (4) derart angelegt sind, dass die Signale zyklusweise zeitgleich an die Raumfläche gelangen.

10. Einrichtung nach einem der vorhergehenden Ansprüche, **dadurch gekennzeichnet, dass** die frequenzaufteilende Struktur als Fasergitterstruktur (5) ausgebildet ist, deren Gitterelemente in der optischen Faser entweder diagonal, d.h. geblazed, oder wendelförmig angeordnet sind.

11. Einrichtung nach einem der vorhergehenden Ansprüche, **dadurch gekennzeichnet, dass** die frequenzaufteilende Struktur als photonische Kristallstruktur (7) in der optischen Faser ausgebildet ist.

12. Einrichtung nach einem der vorhergehenden Ansprüche, **dadurch gekennzeichnet, dass** zum Ausgleich von Laufzeitunterschieden durch zeitliche Verzögerung von aus der Faser ausgekoppelten Signalen wenigstens ein Verzögerungselement vorgesehen ist.

13. Einrichtung nach Anspruch 12, **dadurch gekennzeichnet, dass** das Verzögerungselement eine phosphoreszierende/fluoreszierende Substanz ist, die den Laufzeitunterschied einzelner Impulse durch Nachleuchten ausgleicht.

14. Einrichtung nach Anspruch 13, **dadurch gekennzeichnet, dass** ein Projektionsschirm entlang der Raumfläche angeordnet ist, welcher mit der Substanz beschichtet ist.

15. Einrichtung nach Anspruch 12, **dadurch gekennzeichnet, dass** das Verzögerungselement eine optische Faser (9) ist, deren Länge der gewünschten Verzögerung entspricht.

## Claims

1. Device for transmitting optical signals of different frequencies, in particular for communication purposes, said signals being carried serially in one and the same optical fiber (2), **characterized in that** the fiber (2) is provided with a structure (1) for dividing light according to frequency, which structure divides optical signals (3) carried by the fiber (2) according to their frequency and radiates said signals to the outside with a spatial offset from one another as a function of the frequency, and **characterized in that** a suitable apparatus (6) images the radiated signals (Vi) onto a point (x) associated with their respective frequency on a spatial surface (4) external to the fiber for further processing.

2. Device according to claim 1, **characterized in that** sections of the fiber (2) itself are designed as a frequency-dividing structure (1) that divides the optical signals (3) according to their frequency and radiates said signals with a spatial offset from one another as a function of the frequency.

3. Device according to claim 2, **characterized in that** the suitable apparatus is a focusing device (6).

4. Device according to any one of the preceding claims, **characterized in that** at least one focusing element for accepting signals imaged onto the spatial surface is provided on the spatial surface.

5. Device according to any one of claims 1, 2 or 4, **characterized in that** a focusing element is provided for each signal imaged onto the spatial surface.

6. Device according to claim 5, **characterized in that** the focusing elements are located on the ends (11) of optical fibers (9), serving to transfer the signals.

7. Device according to any one of the preceding claims, **characterized in that** the signals are imaged onto linearly arranged points on the spatial surface (4).

8. Device according to any one of the preceding claims, **characterized in that** the spatial surface (4) is designed with a shape such that each individual signal (Vi) arrives at the spatial surface with a specific predefined temporal shift as a function of said signal's frequency.

9. Device according to any one of the preceding claims, **characterized in that** the shape and arrangement of the spatial surface (4) are designed such that the signals cyclically arrive simultaneously at the special surface.

10. Device according to any one of the preceding claims, **characterized in that** the frequency-dividing structure is designed as a fiber grating structure (5) whose grating elements are arranged within the fiber either diagonally, i.e. blazed, or helically.

11. Device according to any one of the preceding claims, **characterized in that** the frequency-dividing structure is designed as a photonic crystal structure (7) in the optical fiber.

12. Device according to any one of the preceding claims, **characterized in that** at least one delay element is provided to compensate for differences in propagation delay resulting from time delays of signals coupled out of the fiber.

13. Device according to claim 12, **characterized in that** the delay element is a phosphorescing/fluorescing substance that compensates for the propagation delay differences of individual pulses through persistence.

14. Device according to claim 13, **characterized in that** a projection screen coated with the substance is arranged along the spatial surface.

15. Device according to claim 12, **characterized in that** the delay element is an optical fiber (9) whose length corresponds to the desired delay.

## Revendications

1. Equipement de transmission de signaux optiques de différentes fréquences, essentiellement à des fins de communication, lesquels sont acheminés en série dans une même fibre optique (2), **caractérisé en ce que** la fibre (2) présente une structure (1) qui répartit la lumière selon la fréquence en séparant les signaux optiques (3) acheminés par la fibre (2) selon leur fréquence et en les émettant vers l'extérieur en décalage dans l'espace les uns par rapport aux autres en fonction de la fréquence et **en ce qu'**un dispositif approprié (6) reproduit les signaux émis (Vi) pour traitement ultérieur à un endroit (x) attribué à la fréquence respective sur une surface (4) se trouvant à l'extérieur de la fibre (2).

2. Equipement selon la revendication 1, **caractérisé en ce que** la fibre (2) fait elle-même fonction sur certains tronçons de structure de répartition de fréquences (1), laquelle sépare les signaux optiques (3) selon leur fréquence et les émet en décalage dans l'espace les uns par rapport aux autres en fonction de la fréquence.

3. Equipement selon la revendication 2, **caractérisé en ce que** le dispositif approprié est un équipement de focalisation (6).

4. Equipement selon l'une des revendications précédentes, **caractérisé en ce qu'**au moins un élément de focalisation est prévu sur la surface pour réception des signaux reproduits sur la surface.

5. Equipement selon l'une des revendications précédentes 1, 2 ou 4, **caractérisé en ce qu'**un élément de focalisation est prévu pour chaque signal reproduit sur la surface.

6. Equipement selon la revendication 5, **caractérisé en ce que** les éléments de focalisation sont placés aux extrémités (11) de fibres optiques (9) qui servent au réacheminement des signaux.

7. Equipement selon l'une des revendications précédentes, **caractérisé en ce que** les signaux sont reproduits à des endroits de la surface (4) disposés linéairement.

8. Equipement selon l'une des revendications précédentes, **caractérisé en ce que** la surface (4) a une forme telle que chaque signal (Vi) atteint la surface avec un décalage dans le temps prédéterminé en fonction de sa fréquence.

9. Equipement selon l'une des revendications précédentes, **caractérisé en ce que** la forme et la disposition de la surface (4) sont telles que, de façon cyclique, les signaux atteignent la surface en même temps.

10. Equipement selon l'une des revendications précédentes, **caractérisé en ce que** la structure de répartition de fréquences est une structure de trame de fibres (5) dont les éléments de trame sont disposés dans la fibre optique soit de manière diagonale, c'est-à-dire blazée, soit sous une forme hélicoïdale

11. Equipement selon l'une des revendications précédentes, **caractérisé en ce que** la structure de répartition de fréquences est une structure cristalline photonique (7) dans la fibre optique.

12. Equipement selon l'une des revendications précédentes, **caractérisé en ce qu'**au moins un élément retardateur est prévu pour compenser les différences de temps de transit dus aux retards intervenus sur les signaux découplés de la fibre.

13. Equipement selon la revendication 12, **caractérisé en ce que** l'élément retardateur est une substance phosphorescente/fluorescente qui compense par postluminescence la différence de temps de transit de diverses impulsions.

14. Equipement selon la revendication 13, **caractérisé en ce qu'**un écran de projection enduit de la substance est disposé le long de la surface

15. Equipement selon la revendication 12, **caractérisé en ce que** l'élément retardateur est une fibre optique (9) dont la longueur correspond au retardement voulu.
